# EUROPEAN PATENT APPLICATION

(11) **EP 3 553 736 A1**
(43) Date of publication of application: **16.10.2019**
(21) Application number: 19164943.3
(22) Date of filing: 25.03.2019
(51) Int. Cl.: G06Q 50/30, G06Q 10/04, G06Q 10/02

(54) **INFORMATION PROCESSING APPARATUS, METHOD FOR PROPOSING RIDE-SHARING BY INFORMATION PROCESSING APPARATUS**

(30) Priority: 09.04.2018 JP 2018074421
(71) Applicant: TOYOTA JIDOSHA KABUSHIKI KAISHA, Toyota-shi, Aichi-ken 471 8571 (JP)
(72) Inventor: MITSUMAKI, Koichiro, Toyota-shi, Aichi-ken,, 471-8571 (JP); ENDO, Masato, Toyota-shi, Aichi-ken,, 471-8571 (JP); KONDO, Ryota, Toyota-shi, Aichi-ken,, 471-8571 (JP); OBATA, Yasuhisa, Toyota-shi, Aichi-ken,, 471-8571 (JP)
(74) Representative: Kuhnen & Wacker Patent- und Rechtsanwaltsbüro PartG mbB

(57) **Abstract**

An information processing apparatus (10) includes: a registration unit (101) configured to receive registration of action schedules from users and store the action schedules in action schedule information; a selection unit (102) configured to extract, from the action schedule information, users who registered an action schedule of heading for a prescribed destination, and select the extracted users as ride-sharing candidate users; and a notification unit (103) configured to notify the ride-sharing candidate users of proposal information that includes proposal of moving to the prescribed destination by riding on a shared vehicle.

## Description

### BACKGROUND OF THE INVENTION

### 1. Field of the Invention

The present invention relates to an information processing apparatus, a method for proposing ride-sharing by an information processing apparatus, and a non-transitory storage medium storing program.

### 2. Description of Related Art

Today, a service called car-sharing that enables a plurality of users to share one vehicle is widely diffused. For example, a car-sharing reservation system disclosed in Japanese Patent Application Publication No. 2011-209960 (JP 2011-209960 A) allows a user to register favorite information, such as favorite vehicle colors and favorite vehicle types, in the system in advance so as to preferentially display on a reservation screen a vehicle to be arranged that matches with the favorite information registered by the user.

Nowadays, there is also a service called ride-sharing as a kind of car-sharing service. In the ride-sharing service, users heading for the same destination ride on a shared vehicle.

### SUMMARY OF THE INVENTION

In order to stimulate car sharing markets, it may be considered to establish the environment where car-sharing is more familiar to the users. However, it is perceived that the car-sharing is limitedly used by the users who recognize the presence of the car-sharing as moving means to the destination. In other words, it is perceived that the users who have never used the car-sharing before or who have no idea about the car-sharing basically have no opportunity to use the car-sharing. Therefore, in order to stimulate the car sharing markets, there is room for examination of techniques that enable various users, including the users who have little experience in use of the car-sharing, to easily use the car-sharing.

The present invention provides a technique that can increase opportunities of using the car-sharing.

A first aspect of the invention provides an information processing apparatus including: a registration unit configured to receive registration of action schedules from users and store the action schedules in action schedule information; a selection unit configured to extract, from the action schedule information, users who registered an action schedule of heading for a prescribed destination, and select the extracted users as ride-sharing candidate users; and a notification unit configured to notify the ride-sharing candidate users of proposal information that includes proposal of moving to the prescribed destination by riding on a shared vehicle.

In the first aspect, the selection unit may be configured to select, as users who ride on the shared vehicle, users who accepted the proposal of moving to the prescribed destination by riding on the shared vehicle from among the ride-sharing candidate users who are notified of the proposal information.

In the first aspect, the notification unit may be configured to notify the ride-sharing candidate users of evaluation information included in the proposal information, the evaluation information indicating evaluation of the ride-sharing candidate users by other users when the respective ride-sharing candidate users used the ride-sharing in the past.

In the first aspect, the action schedules stored in the action schedule information may include information indicating places of departure, the information processing apparatus may include a determination unit configured to determine a travel route bound for the prescribed destination via all the places of departure of the respective users who ride on the shared vehicle, except the place of departure of the user who drive the vehicle, and the notification unit may be configured to notify, at least one of the vehicle used for ride-sharing and the users who ride on the shared vehicle, of the information indicating the travel route determined by the determination unit.

In the first aspect, the selection unit may be configured to select, out of combinations of an accessible location accessible to each of a plurality of vehicles and a place of departure included in each of the action schedules of the users who ride on the shared vehicle, a vehicle and a user corresponding to the combination shortest in distance between the accessible location and the place of departure, as the shared vehicle and as the user who drives the shared vehicle, respectively, and the notification unit may be configured to notify the user who drives the shared vehicle, of drive request information and information on the shared vehicle.

In the first aspect, the action schedules stored in the action schedule information may include information indicating places of departure, the information processing apparatus may include a determination unit configured to determine a travel route bound for the prescribed destination via all the places of departure of the respective users who ride on the shared vehicle, and the notification unit may be configured to notify the shared vehicle that is automatically operable, of the information indicating the travel route determined by the determination unit.

In the first aspect, the registration unit may be configured is receive registration of the action schedule by causing a user who registers the action schedule to select one of a plurality of destinations registered in advance by other users, and the destinations registered in advance may be locations where events are taken place or locations where prescribed stores are present.

In the first aspect, the notification unit may be configured to notify, a first user among the ride-sharing candidate users, of evaluation information of a second user among the ride-sharing candidate users, the evaluation information of the second user indicating evaluation of the second user made by another user when the ride-sharing candidate user used the ride-sharing in the past.

A second aspect of the invention provides a method for proposing ride-sharing by an information processing apparatus, including: a step of receiving registration of action schedules from users and storing the action schedules in action schedule information; a step of extracting from the action schedule information the users who registered a action schedule of heading for a prescribed destination, and selecting the extracted users as ride-sharing candidate users; and a step of notifying the ride-sharing candidate users of proposal information including proposal of moving to the prescribed destination by riding on a shared vehicle.

A third aspect of the invention provides a non-transitory storage medium storing a program. When the program is executed by a computer, the program causes the computer to execute operation including: a step of receiving registration of action schedules from a plurality of users and storing the action schedules in action schedule information; a step of extracting from the action schedule information the users who registered a action schedule of heading for a prescribed destination, and selecting the extracted users as ride-sharing candidate users; and a step of notifying, the selected ride-sharing candidate users, of proposal information including proposal of moving to the prescribed destination by riding on a shared vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows a configuration example of a car-sharing system according to an embodiment;
FIG. 2 shows one example of the functional block configuration of an information processing apparatus;
FIG. 3A shows a specific example of a user DB;
FIG. 3B shows a specific example of an action schedule DB;
FIG. 4A shows a specific example of a destination DB;
FIG. 4B shows a specific example of a vehicle DB;
FIG. 5 shows one example of processing procedures performed by the information processing apparatus;
FIG. 6 is an explanatory view of an operation example 1; and

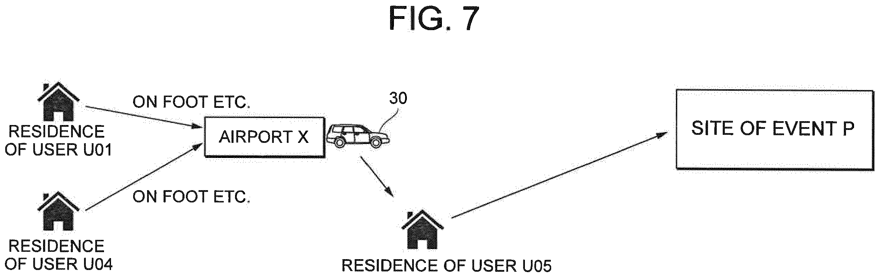

FIG. 7 is an explanatory view of an operation example 2.

### DETAILED DESCRIPTION OF EMBODIMENTS

Hereinafter, an embodiment of the present invention will be described with reference to the accompanying drawings. In the drawings, identical or like component members are designated by identical or like numerals.

### System Configuration

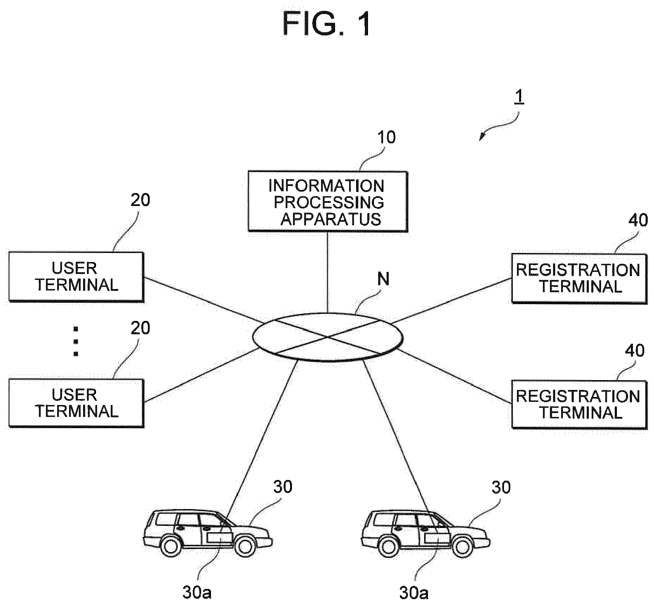

FIG. 1 shows a configuration example of a car-sharing system 1 according to an embodiment. The car-sharing system 1 includes an information processing apparatus 10, user terminals 20, vehicles 30, and registration terminals 40. The vehicles 30 are each mounted with an on-board device 30a. The information processing apparatus 10, the user terminals 20, the on-board devices 30a, and the registration terminals 40 can communicate with each other through a communication network N.

Generally, an action of a plurality of users sharing the same vehicle 30 is called car-sharing. An action of the users riding on a shared vehicle 30 that heads for a certain destination is called ride-sharing. Since the ride-sharing is an action of the users sharing the same vehicle 30, it can be considered, in a broad sense, as a kind of the car-sharing. The present embodiment will be described on the assumption that the car-sharing includes the ride-sharing.

The car-sharing system 1 is a system that receives registration of action schedules from users, and proposes moving by riding on a shared vehicle 30 (ride-sharing) to the users heading for an identical destination among the users who registered the action schedules. The present embodiment assumes that the users who register the action schedules include the users who are not assumed to use car-sharing as moving means to the destination.

Upon reception of the action schedules of the users, the information processing apparatus 10 manages databases, and select (match) the users who can move to the destination by riding on a shared vehicle, out of the users who registered the action schedules. The information processing apparatus 10 also notifies, to the selected users through the user terminals 20, proposal information that proposes moving to the destination by riding on the shared vehicle. The information processing apparatus 10 also determines a travel route to the destination, and notifies the determined travel route to the user terminals 20 of the users who accepted the proposal, or to the on-board device 30a of the vehicle 30 used for ride-sharing. The information processing apparatus 10 may be constituted of one or more information processing apparatuses, or may be constituted of a crowd server or a virtual server.

The user terminals 20 are terminals, such as smartphones, tablet terminals, mobile terminals, or notebook computers, used by the users using the car-sharing system 1. The users can register their own action schedules in the information processing apparatus 10 by accessing the information processing apparatus 10 with the user terminals 20.

The vehicles 30 include both private vehicles and corporate vehicles that are used by users for ride-sharing. The vehicle 30 may be any vehicle as long as users can ride on the vehicle at the same time and the vehicle can move along a free travel route. Specifically, the vehicles 30 may be rental vehicles lent out for car-sharing by a company, taxis usable for ride-sharing, or private vehicles. Without being limited to automobiles, the vehicles 30 may be, for example, large-sized vehicles 30, like buses, that have a riding capacity of a dozen people to dozens of people, or may be motorcycles. The vehicles 30 may be vehicles 30 (hereinafter called "manual driving vehicle") steered by users, or may be automatically operable vehicles 30 (hereinafter called "automatic driving vehicles").

When the vehicle 30 is a manual driving vehicle, the on-board device 30a may be a device (for example, a navigation device) that can display a travel route to the destination that is notified from the information processing apparatus 10. When the vehicle 30 is an automatic driving vehicle, the on-board device 30a performs various kinds of control for automatic operation of the vehicle 30 based on the travel route to the destination transmitted from the information processing apparatus 10.

The registration terminals 40 are used to register the information relating to destinations in the action schedules of the users, such as event schedule information and store locations, in the information processing apparatus 10. The registration terminals 40 are, for example, smartphones, tablet terminals, mobile terminals, notebook computers, or the like. Users, such as individuals or juridical persons who hold events, or individuals or juridical persons who manage stores, can use the registration terminals 40 to register various pieces of information on the events (including summary, location, and date and time of the events) and the information on the stores (including summary, location, and sales articles of the stores) in the information processing apparatus 10. Thus, the users can register their own action schedules (for example, a schedule to go to store X) by selecting a location to go while referring to the event schedule information or store information registered in the information processing apparatus 10.

### Functional Block Configuration

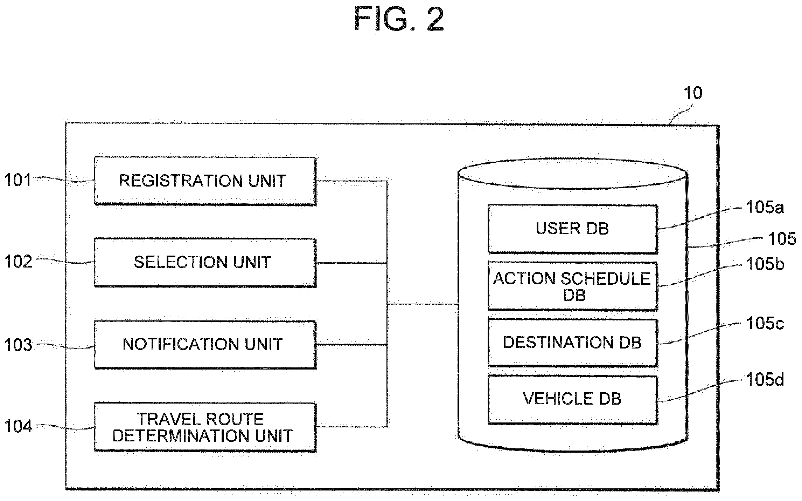

FIG. 2 shows one example of the functional block configuration of the information processing apparatus 10. The information processing apparatus 10 includes a registration unit 101, a selection unit 102, a notification unit 103, a travel route determination unit 104, and a storage unit 105.

The registration unit 101, the selection unit 102, the notification unit 103, and the travel route determination unit 104 may be implemented when a processor of the information processing apparatus 10, for example, a CPU, executes the program stored in the memory. The program may be stored in a recording medium. The recording medium that stores the program may be a non-transitory recording medium. Although the non-transitory recording medium is not particularly limited, the non-transitory recording medium may be a recording medium, such as a USB memory or a CD-ROM, for example. The storage unit 105 may be implemented with a memory or a storage device included in the information processing apparatus 10. The information processing apparatus 10 may include one or more memories and CPUs.

The storage unit 105 stores a user DB 105a, an action schedule DB 105b (action schedule information), a destination DB 105c, and a vehicle DB 105d (vehicle information). The user DB 105a stores information regarding the users registered as a user in the car-sharing system 1. The action schedule DB 105b stores action schedules indicating which user wants to move from where to where and when. The destination DB 105c stores various pieces of information regarding events registered in advance by the individuals or juridical persons who hold the events or stores registered in advance by the individuals or juridical persons who manage the stores. The vehicle DB 105d stores information regarding the vehicles 30 available for ride-sharing.

The registration unit 101 receives, from a user, registration of the action schedule of the user, and stores the registered action schedule in the action schedule DB 105b. The registration unit 101 may receive registration of the action schedule by allowing a user to select any one of a plurality of destinations registered in advance in the destination DB 105c by users (the individuals or juridical persons who hold the events or the individuals or juridical persons who manage the stores) other than the user who registers the action schedule.

The selection unit 102 extracts from the action schedule DB 105b the users who registered the action schedule of heading for a prescribed destination, and selects the extracted users as the users (hereinafter referred to as "ride-sharing candidate users") who are proposed to ride on a shared vehicle 30. The selection unit 102 also selects, out of the ride-sharing candidate users, the ride-sharing candidate users who accepted the proposal of moving to the prescribed destination by riding on the shared vehicle 30, as the users (hereinafter referred to as "ride-sharing users") who actually ride on the shared vehicle 30.

The selection unit 102 also selects a vehicle 30 used for ride-sharing from the vehicles 30 registered in the vehicle DB 105d, and selects a driver who drives the selected vehicle 30 out of the ride-sharing users.

The notification unit 103 notifies, to the ride-sharing candidate users selected by the selection unit 102, "proposal information" that proposes the ride-sharing candidate users to move to the prescribed destination by riding on the shared vehicle 30. The proposal information is displayed on the screen of the user terminal 20 of each of the ride-sharing candidate users. The notification unit 103 may also notify, to the ride-sharing candidate users, information indicating evaluation of the respective users by other users when the respective users rode on the shared vehicle or vehicles 30 in the past.

The travel route determination unit 104 determines a travel route on which the vehicle 30 should travel, when the ride-sharing users ride on the vehicle 30 to head for a prescribed destination from a place of departure. The travel route on which the vehicle 30 should travel is, for example, a travel route from the place where the vehicle 30 is stored to the destination via the residences of the respective ride-sharing users.

Next, specific examples of the user DB 105a, the action schedule DB 105b, the destination DB 105c, and the vehicle DB 105d will be shown.

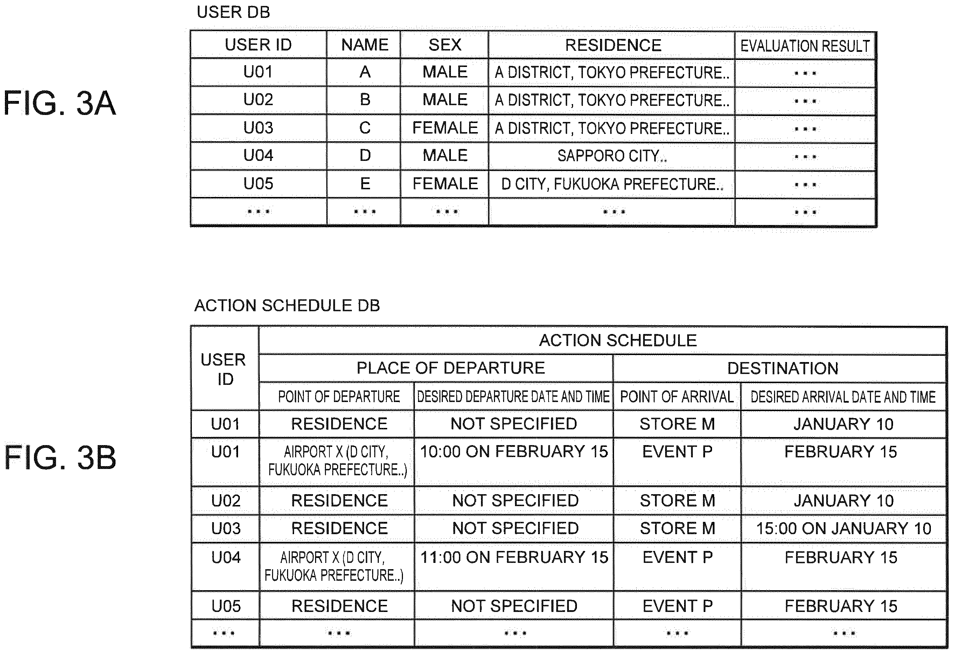

FIG. 3A shows a specific example of the user DB 105a. A column "user ID" stores identifiers to uniquely identify users in the car-sharing system 1. For example, the user ID may be issued by the information processing apparatus 10 when a user registers as a user to use the car-sharing system 1 (hereinafter simply referred to as "registers as a user"). A column "name" stores the name input at the time of registering as a user. A column "sex" stores a sex input at the time of registering as a user. A column "residence" stores the information (including an address and a latitude-longitude) indicating the location of residence input at the time of registering as a user. A column "evaluation result" stores information indicating evaluation from other ride-sharing users when the pertinent user uses the car-sharing system 1 in the past. The evaluation from other ride-sharing users may be, for example, evaluation in two grades including "future ride-sharing acceptable" and "future ride-sharing unacceptable." Without being limited to this, the evaluation may be made in three or more grades. The evaluation result may store an average of the evaluation results provided in the past, or may store a history of the evaluation results provided in the past (for example, a history including the dates and the evaluation results).

FIG. 3B shows a specific example of the action schedule DB 105b. Since a column "user ID" is the same as "user ID" of the user DB 105a, description thereof is omitted. A column "action schedule" stores the action schedule of users input in the information processing apparatus 10 by each of the users themselves through the user terminals 20. The action schedule includes a column "point of departure" and a column "desired departure date and time" as information regarding the place of departure. The action schedule also includes a column "point of arrival" and a column "desired arrival date and time" as information regarding a destination. The column "point of arrival" may store a point of arrival desired by each user, or may store a point of arrival selected out of the points of arrival registered in the destination DB 105c described later.

In the example of FIG. 3B, a user identified by a user ID "U01" registers an action schedule scheduled to go to a store M from the residence on January 10, and an action schedule scheduled to leave an airport X at 10:00 in the morning on February 15, and go to an event P. The latter action schedule is on the assumption of an action schedule in which the U01 user is scheduled to leave the residence for an airport to take an airplane scheduled to arrive at the airport X around 10:00 in the morning, and then head for the event P from the airport X.

Date and time in the columns "desired departure date and time" and "desired arrival date and time" may entirely or partially be omitted as specified by the user. It means, for example, that the U05 user does not particularly specify the time of departure from the residence or the time of arrival at the site of the event P (any time is acceptable) as long as the user can arrive at the site of the event P on February 15.

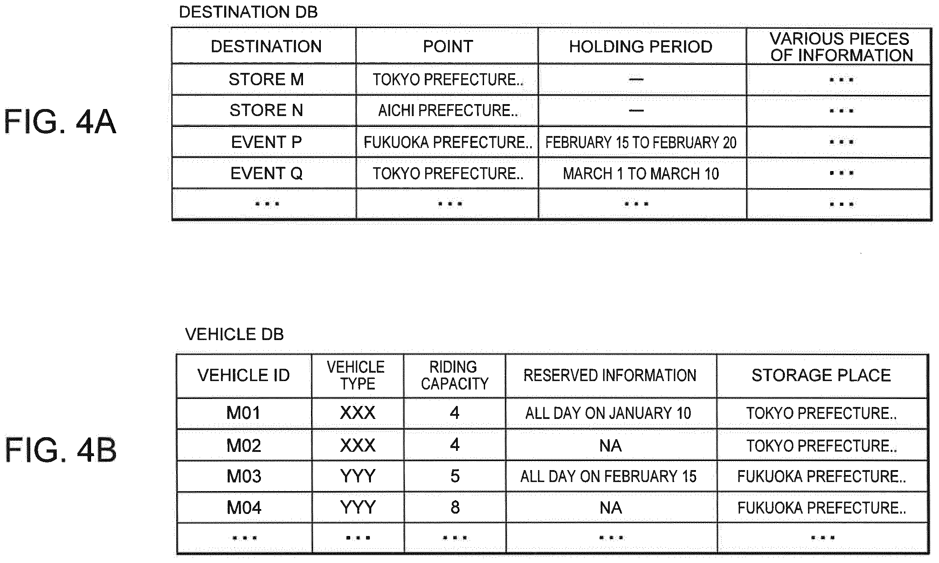

FIG. 4A shows a specific example of the destination DB 105c. A column "destination" stores the name of stores, the name of events, or the like. The destination is not limited to the stores or the events. Any destination may be stored in the column "destination" as long as the location of the destination can be identified. A column "point" stores information (including an address and a latitude-longitude) indicating the location where the destination is present. A column "holding period" stores the period of a registered event when the event is held for a limited time. A column "various pieces of information" stores various pieces of information regarding the destination, including explanation of goods sold at the stores, and the summary of the event.

FIG. 4B shows a specific example of the vehicle DB 105d. A column "vehicle ID" stores identifiers to uniquely identify the vehicles 30 used for ride-sharing in the car-sharing system 1. The vehicle ID may be the number of the vehicle 30, for example. A column "vehicle type" may store the vehicle type and the manufacture name of the vehicles 30. A column "riding capacity" stores the riding capacity of the vehicles 30. A column "reservation information" stores the period in which the vehicles 30 are reserved (i.e., unavailable). A column "storage place" stores the information indicating the places where the vehicles 30 are parked. Since the storage places are also the places (accessible locations) where the ride-sharing users serving as a driver can ride on the vehicles 30, the storage places may also be called rental stations of the vehicles 30.

### Processing Procedures

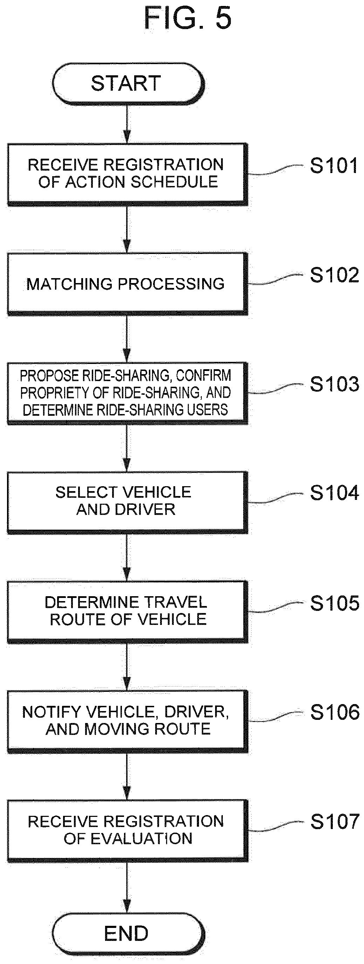

A description is now given of the processing procedures performed by the information processing apparatus 10. FIG. 5 shows one example of the processing procedures performed by the information processing apparatus 10.

In step S101, the registration unit 101 receives registration of an action schedule from the user terminal 20 of a user registered as a user in the car-sharing system 1, and stores the registered action schedule in the action schedule DB 105b. The registration unit 101 may display a screen of receiving registration of the action schedule on the user terminal 20 of the user who registers an action schedule. The user can register a desired action schedule in the information processing apparatus 10 by inputting a point of departure place, desired departure time, a point of destination, and desired arrival time on the screen.

The registration unit 101 may also display on the screen a list of the information (name and point of destination, a holding period, and various pieces of information) regarding the destination stored in the destination DB 105c. The user can register an action schedule by selecting, out of a plurality of destinations displayed on the screen, a desired place to go, and specifying a desired date to go to the selected destination, a desired arrival time, or the like. Thus, even the user having little experience in use of the car-sharing can still accept a ride-sharing proposal by simply selecting a desired destination, and therefore the car-sharing markets can be stimulated.

In step S102, the selection unit 102 selects ride-sharing candidate users by matching the users who registered action schedules. Specifically, the selection unit 102 selects from the action schedule DB 105b the users who registered the action schedules in which the "point of departures" are identical or included in a prescribed range (first range), the "points of arrival" are identical, and the "desired departure date and time" and "desired arrival date and time" are within a prescribed time (for example, within one-hour time lag), respectively, as the ride-sharing candidate users. The prescribed range (first range) may be any range, such as within a radius of 20 km, or in the same administrative boundaries (such as cities, wards, towns, and villages). The "points of arrival" may not necessarily be identical, and may be included in a prescribed range (second range). The prescribed range (second range) may be any range, such as within a radius of 5 km. The selection unit 102 may search the vehicle DB 105d in advance to ascertain the maximum number of the riding capacity of the vehicles 30 available for ride-sharing, and may select the ride-sharing candidate users within the range of the ascertained maximum number of the riding capacity.

The selection unit 102 may also acquire the "evaluation result" of each of the selected ride-sharing candidate users from the user DB 105a, and may exclude the users, determined to be low in evaluation result, from the ride-sharing candidate users. The selection unit 102 may determine whether or not the evaluation result is low based on whether or not the evaluation result satisfies a specified condition. For example, when the "evaluation result" is presented in two grades, and the evaluation of "future ride-sharing unacceptable" gets a majority, the user corresponding to that evaluation may be excluded from the ride-sharing candidate users.

In step S103, the notification unit 103 notifies, to the user terminals 20 of the ride-sharing candidate users selected in step S102, "proposal information" that proposes moving to a prescribed destination by riding on a shared vehicle 30. For example, the proposal information includes a destination, a date of heading for the destination, and names and sexes of the respective ride-sharing users. Here, the notification unit 103 may acquire from the user DB 105a the "evaluation results" of the ride-sharing candidate users selected in step S102, except each recipient of the proposal information, and notify the proposal information including the acquired "evaluation results." Thus, each of the ride-sharing candidate users can determine whether or not to accept the ride-sharing proposal based on the knowledge of the evaluation results of the other users who are going to ride on a shared vehicle.

The user terminal 20 of each of the ride-sharing candidate users receives from the user input of whether to accept the ride-sharing proposal, and notifies the received result to the information processing apparatus 10. The selection unit 102 of the information processing apparatus 10 determines the users who accepted the ride-sharing proposal as the ride-sharing users who actually ride on the shared vehicle 30, out of the ride-sharing candidate users.

In step S104, the selection unit 102 selects, out of the vehicles 30 registered in the vehicle DB 105d, a vehicle 30 used for ride-sharing. When the vehicle 30 used for ride-sharing is a manual driving vehicle, the selection unit 102 selects, out of the ride-sharing users, a user (driver) who drives the selected vehicle 30.

Specifically, the selection unit 102 searches the vehicle DB 105d to select the vehicle 30 used for ride-sharing. The vehicle 30 used for ride-sharing at least has the riding capacity equal to or more than the number of ride-sharing users and is not reserved in the date and time of the ride-sharing. Here, when the vehicle 30 used for ride-sharing is a manual driving vehicle, the selection unit 102 may select, out of the combinations of the storage places of the vehicles 30 registered in the vehicle DB 105d and the "places of departure" included in the action schedules of the ride-sharing users, a vehicle 30 and a ride-sharing user corresponding to the combination shortest in distance between the storage place and the place of departure, as the vehicle 30 used for ride-sharing and the user (driver) who drives the vehicle 30, respectively. This makes it possible to reduce the load of the user who goes to receive the vehicle 30.

When the vehicle 30 used for ride-sharing is an automatic driving vehicle, the vehicle 30 automatically goes to pick up the user. Hence, it is not necessary to take into consideration the load of the user who goes to receive the vehicle 30. Accordingly, in the selection unit 102, out of the combinations of the storage places of the vehicles 30 registered in the vehicle DB 105d and the "places of departure" included in the action schedules of the ride-sharing users, the vehicles 30 stored in the places that are in a specified distance range (third range) from the place of departure of any one of the ride-sharing users may be selected, and out of the selected vehicles 30, any vehicle 30 may be selected as the vehicle 30 used for ride-sharing.

In step S105, when the vehicle 30 used for ride-sharing is a manual driving vehicle, the travel route determination unit 104 determines a travel route from the storage place of the vehicle 30 to the prescribed destination via all the places of departure of the ride-sharing users other than the ride-sharing user as a driver. When the vehicle 30 used for ride-sharing is an automatic driving vehicle, the travel route determination unit 104 determines a travel route from the storage place of the vehicle 30 to the prescribed destination via all the places of departure in the action schedules of the ride-sharing users.

In step S106, when the vehicle 30 used for ride-sharing is a manual driving vehicle, the notification unit 103 notifies, to the user terminal 20 of the user serving as a driver, driving request information, information indicating the storage place of the vehicle 30 used for ride-sharing, and information indicating the travel route determined in step S105. The notification unit 103 may notify expected arrival time of the vehicle 30 to the user terminals 20 of the users other than the driver. The notification unit 103 may directly notify the information indicating the travel route to the on-board device 30a (for example, a navigation device) of the vehicle 30 used for ride-sharing. The user serving as a driver goes to the notified storage place to receive the vehicle 30, and drives the vehicle 30 in accordance with the travel route specified by the on-board device 30a. This makes it possible to head for the destination while picking up all the other ride-sharing users.

When the vehicle 30 used for ride-sharing is an automatic driving vehicle, the notification unit 103 notifies the information indicating the travel route determined by the travel route determination unit 104 to the on-board device 30a of the vehicle 30 used for ride-sharing. The on-board device 30a of the vehicle 30 controls the vehicle 30 in accordance with the notified travel route, which achieves an automatic driving from the storage place to the destination via the places of departure of the respective ride-sharing users.

In step S107, the registration unit 101 displays on the user terminals 20 of the ride-sharing users after arriving at the destination a screen for inputting evaluation of other ride-sharing users. The registration unit 101 also receives from the respective ride-sharing users the input of evaluation of other ride-sharing users, and stores the received evaluation results in the "evaluation result" of the user DB 105a.

### Operation Examples

Description is now given of the operation performed by the car-sharing system 1. The following description will be made on the assumption that data shown in FIGS. 3A, 3B, 4A and 4B are already stored in the user DB 105a, the action schedule DB 105b, the destination DB 105c, and the vehicle DB 105d, respectively.

### Operation Example 1

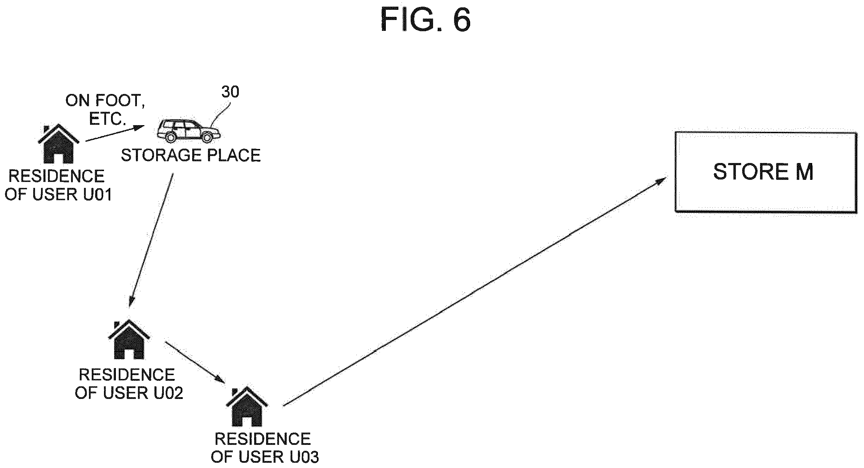

An operation example 1 assumes the situation where users U01, U02, U03 head for a store M by riding on a shared vehicle 30 (manual driving vehicle). FIG. 6 is an explanatory view of the operation example 1.

First, the selection unit 102 of the information processing apparatus 10 searches the action schedule DB 105b, and selects ride-sharing candidate users. According to the action schedule DB 105b, the users U01, U02, U03 registered the action schedules that are scheduled to go to an identical destination (store M) on January 10. The points of departure of the users U01, U02, U03 are within a prescribed range (A ward in Tokyo), respectively. Therefore, the selection unit 102 selects the users U01, U02, U03 as the ride-sharing candidate users who go to the store M from A ward in Tokyo, and confirms whether or not the users U01, U02, U03 accept the ride-sharing proposal. In the operation example 1, it is assumed that the users U01, U02, U03 accept the ride-sharing proposal.

Next, the selection unit 102 selects a user who drives the vehicle 30 out of the users U01, U02, U03, and selects a vehicle 30 used for ride-sharing. Here, it is assumed that the selected vehicle 30 is the vehicle having a vehicle ID of M02, which is stored in the storage place within a prescribed range from the points of departure of the users U01, U02, U03, and has no reservation information for January 10. It is also assumed that the user U01 whose place of departure is nearest to the storage place of the vehicle 30 is selected as a driver. Next, the travel route determination unit 104 determines a travel route from the storage place of the vehicle 30 to the store M via the residence of the user U02 and the residence of the user U03. Next, the notification unit 103 notifies, to the user terminal 20 of the user U01, a message indicating the user U01 as a specified driver, the storage place of the vehicle 30 having a vehicle ID of M02, and the travel route from the storage place of the vehicle 30 to the store M via the residence of the user U02 and the residence of the user U03. By referring to the message, the user U01 can move to the storage place of the vehicle 30 on foot or by means of public transportation facilities or the like, and drive the vehicle 30 in accordance with the notified travel route. As a result, it is possible to head for the store M, while picking up the users U02, U03.

### Operation Example 2

The operation example 2 assumes the situation where users U01, U04, U05 head for the site of an event P from an airport via the residence of the user U05 by riding on a shared vehicle 30 (automatic driving vehicle). It is assumed that the users U01, U04 leave their residences and fly to the airport (airport X in D city of Fukuoka prefecture) in advance.

First, the selection unit 102 of the information processing apparatus 10 searches the action schedule DB 105b, and selects ride-sharing candidate users. According to the action schedule DB 105b, the users U01, U04, U05 registered the action schedules that are scheduled to go to an identical destination (the site of the event P) on February 15. The points of departure of the users U01, U04, U05 are within a prescribed range (D city in Fukuoka prefecture), respectively. The desired departure date and time of the user U01 and the desired departure date and time of the user U04 are within prescribed time (assumed to be within one hour in the operation example 2). Therefore, the selection unit 102 selects the users U01, U04, U05 as the ride-sharing candidate users who go to the site of the event P from D city in Fukuoka prefecture. The selection unit 102 confirms whether or not the selected users U01, U04, U05 accept the ride-sharing proposal. In the operation example 2, it is assumed that the users U01, U04, U05 accept the ride-sharing proposal.

Next, the selection unit 102 selects a vehicle 30 used for ride-sharing. Here, it is assumed that the selected vehicle 30 is the vehicle having a vehicle ID of M04, which is stored in the storage place within a prescribed range from the points of departure of the users U01, U04, U05, and has no reservation information for February 15. Next, the travel route determination unit 104 determines a travel route from the storage place of the vehicle 30 to the site of the event P via the airport and the residence of the user U05. Next, the notification unit 103 notifies the information indicating the determined travel route to the on-board device 30a of the vehicle 30 having a vehicle ID of M04. Thus, the vehicle 30 having a vehicle ID of M04 can automatically drive in accordance with the specified travel route heading for the site of the event P with the users U01, U04, U05 as a passenger.

### Supplements

The car-sharing service provided by the car-sharing system 1 may be a round-trip car-sharing service that requires return of the shared vehicle to the place where the vehicle is rented, or may be a one-way car-sharing service that allows return of the shared vehicle to any stations other than the station where the vehicle is rented.

In the embodiment described above, the action schedule DB 105b may also receive registration of the number of users scheduled to act together. The selection unit 102 may select the vehicle 30 used for ride-sharing in consideration of the number of users scheduled to act together with each of the ride-sharing candidate users and the riding capacity of the vehicle 30.

The embodiment described in the foregoing is presented for easy understanding of the present invention and is not presented for restrictive interpretation of the invention. Flowcharts and sequences described in the embodiment, respective elements included in the embodiment, and their arrangement, materials, conditions, forms, sizes and the like are not limited to those disclosed in the embodiment, but may properly be changed. The component members disclosed in different embodiments may partially be replaced or combined with each other.

## Claims

1. An information processing apparatus (10), comprising:
a registration unit (101) configured to receive registration of action schedules from users and store the action schedules in action schedule information;
a selection unit (102) configured to extract, from the action schedule information, users who registered an action schedule of heading for a prescribed destination, and select the extracted users as ride-sharing candidate users; and
a notification unit (103) configured to notify the ride-sharing candidate users of proposal information that includes proposal of moving to the prescribed destination by riding on a shared vehicle.

2. The information processing apparatus according to claim 1, wherein
the selection unit is configured to select, as users who ride on the shared vehicle, users who accepted the proposal of moving to the prescribed destination by riding on the shared vehicle from among the ride-sharing candidate users who are notified of the proposal information.

3. The information processing apparatus according to claim 1 or 2, wherein
the notification unit is configured to notify the ride-sharing candidate users of evaluation information included in the proposal information, the evaluation information indicating evaluation of the ride-sharing candidate users by other users when the respective ride-sharing candidate users used the ride-sharing in the past.

4. The information processing apparatus according to claim 2 or 3, wherein
the action schedules stored in the action schedule information include information indicating places of departure,
the information processing apparatus includes a determination unit (104) configured to determine a travel route bound for the prescribed destination via all the places of departure of the respective users who ride on the shared vehicle, except the place of departure of the user who drive the vehicle, and
the notification unit is configured to notify, at least one of the vehicle used for ride-sharing and the users who ride on the shared vehicle, of the information indicating the travel route determined by the determination unit.

5. The information processing apparatus according to claim 4, wherein
the selection unit is configured to select, out of combinations of an accessible location accessible to each of a plurality of vehicles and a place of departure included in each of the action schedules of the users who ride on the shared vehicle, a vehicle and a user corresponding to the combination shortest in distance between the accessible location and the place of departure, as the shared vehicle and as the user who drives the shared vehicle, respectively, and
the notification unit is configured to notify the user who drives the shared vehicle, of drive request information and information on the shared vehicle.

6. The information processing apparatus according to claim 2 or 3, wherein
the action schedules stored in the action schedule information include information indicating places of departure,
the information processing apparatus includes a determination unit (104) configured to determine a travel route bound for the prescribed destination via all the places of departure of the respective users who ride on the shared vehicle, and
the notification unit is configured to notify the shared vehicle that is automatically operable, of the information indicating the travel route determined by the determination unit.

7. The information processing apparatus according to any one of claims 1 to 6, wherein
the registration unit is configured is receive registration of the action schedule by causing a user who registers the action schedule to select one of a plurality of destinations registered in advance by other users, and
the destinations registered in advance are locations where events are taken place or locations where prescribed stores are present.

8. The information processing apparatus according to claim 1, wherein
the notification unit is configured to notify, a first user among the ride-sharing candidate users, of evaluation information of a second user among the ride-sharing candidate users, the evaluation information of the second user indicating evaluation of the second user made by another user when the ride-sharing candidate user used the ride-sharing in the past.

9. A method for proposing ride-sharing by an information processing apparatus (10), comprising:
a step of receiving registration of action schedules from users and storing the action schedules in action schedule information;
a step of extracting from the action schedule information the users who registered a action schedule of heading for a prescribed destination, and selecting the extracted users as ride-sharing candidate users; and
a step of notifying the ride-sharing candidate users of proposal information including proposal of moving to the prescribed destination by riding on a shared vehicle.

10. A non-transitory storage medium storing a program, wherein
when being executed by a computer, the program causes the computer to execute operation including:
a step of receiving registration of action schedules from a plurality of users and storing the action schedules in action schedule information;
a step of extracting from the action schedule information the users who registered a action schedule of heading for a prescribed destination, and selecting the extracted users as ride-sharing candidate users; and
a step of notifying, the selected ride-sharing candidate users, of proposal information including proposal of moving to the prescribed destination by riding on a shared vehicle.
